# EUROPÄISCHE PATENTANMELDUNG

(11) **EP 4 781 841 A1**
(43) Veröffentlichungstag der Anmeldung: **29.07.2026**
(21) Anmeldenummer: 26000003.9
(22) Anmeldetag: 22.01.2026
(51) Int. Cl.: A23P 30/40, A23G 3/34, A23G 3/52

(54) **SCHAUMKUSS UND VERFAHREN ZUR HERSTELLUNG EINES SCHAUMKUSSES**

(30) Priorität: 23.01.2025 DE 102025000261
(71) Anmelder: Klempel, Benjamin, 45478 Mülheim an der Ruhr (DE)
(72) Erfinder: Klempel, Benjamin, 45478 Mülheim an der Ruhr (DE)

(57) **Zusammenfassung**

Die Erfindung betrifft einen Schaumkuss (10) umfassend einen sich entlang einer Hochachse (12) erstreckenden Grundkörper (14) mit einem Kopfabschnitt (16), mit einem Mantelabschnitt (18) und mit einem vom Kopfabschnitt (16) und vom Mantelabschnitt (18) begrenzten Hohlraum (20), wobei der Hohlraum (20) durch eine Öffnung (22) zugänglich ist, eine im Hohlraum (20) angeordnete Schaummasse (24), einen vom Grundkörper (14) separat ausgebildeten Boden (26) zum Verschließen der Öffnung (22), wobei die Schaummasse (24) derart im Grundkörper (14) angeordnet ist, dass innerhalb der Schaummasse (24) und/oder zumindest abschnittsweise zwischen der Schaummasse (24) und dem Mantelabschnitt (18) wenigstens ein Expansionsvolumen (36) vorgesehen ist.

## Beschreibung

Die Erfindung betrifft einen Schaumkuss und ein Verfahren zum Herstellen eines Schaumkusses.

Aus der DE 20 2016 105 114 U1 ist ein Schaumkuss offenbart, welcher einen Eierschaum, eine Waffel und einen Überzug aufweist. Der Eierschaum wird dabei auf einer Waffel aufgesetzt, welche anschließend mit einer Schicht aus Kuvertüre oder einer Fettglasur überzogen wird.

Aus der DE 42 14 581 B1 ist ein dressiertes Schaumerzeugnis mit zwei konzentrisch zueinander angeordneten Schäumen bekannt. Aus der DE 26 39 673 A1 ist ein Verfahren zur Herstellung eines Schaumzuckererzeugnisses mit einem einseitig versiegelten Gebäckplättchen bekannt. Aus dem Video (Haß, Kai-Hendrik: Mülheimer entwickelt glutenfreie Schokoküsse. In: WDR Mediathek. Lokalzeit Ruhr; vom 08.02.2024. Zeitdauer: 23:36 - 28:10. https://www1.wdr.de/mediathek/muelheimer-entwickelt-glutenfreie-schokokuesse-102.html) ist ein Verfahren zum Herstellen von Schaumküssen bekannt, wobei eine Schaummasse in einen Hohlraum eines Grundkörpers dressiert wird.

Der Erfindung liegt die Aufgabe zugrunde, einen Schaumkuss bereitzustellen, dessen Struktur bei sich verändernden Umgebungsbedingungen stabil erhalten bleibt.

Die der Erfindung zugrundeliegende Aufgabe wird gelöst durch einen Schaumkuss, insbesondere einen Schokokuss oder einen Schaumkuss mit einer Fettglasur, mit den Merkmalen des Anspruchs 1. Die Erfindung ist gerichtet auf einen Schaumkuss umfassend: einen sich entlang einer Hochachse erstreckenden Grundkörper mit einem Kopfabschnitt, mit einem, insbesondere an dem Kopfabschnitt angrenzenden, Mantelabschnitt und mit einem vom Kopfabschnitt und vom Mantelabschnitt begrenzten Hohlraum. Der Hohlraum ist durch eine Öffnung zugänglich, welche vorzugsweise dem Kopfabschnitt gegenüberliegend angeordnet ist. Im Hohlraum ist eine Schaummasse angeordnet. Die Öffnung ist mittels eines vom Grundkörper separat ausgebildeten Bodens verschlossen. Der Boden und/oder der Mantelabschnitt und/oder die Schaummasse sind vorzugsweise bündig ausgebildet. Die Schaummasse ist derart im Grundkörper angeordnet, dass innerhalb der Schaummasse und/oder zumindest abschnittsweise zwischen der Schaummasse und dem Mantelabschnitt wenigstens ein Expansionsvolumen vorgesehen ist.

Aufgrund des wenigstens einen Expansionsvolumens kann der Schaumkuss stabil unter verschiedenen Umgebungsbedingungen transportiert und/oder gelagert werden. Sollte es z.B. durch eine Temperatursteigerung zu einem Ausdehnen der Schaummasse (Volumenvergrößerung) kommen, kann die Schaummasse in das Expansionsvolumen expandieren. Demnach ist sichergestellt, dass die Schaummasse bei der Volumenvergrößerung nicht den Grundkörper zerstört, aufreißt, durchbricht bzw. aufsprengt. Demnach kann die Ästhetik des Schaumkusses aufrechthalten bleiben. Die Anordnung des Expansionsvolumen zwischen der Schaummasse und dem Mantelabschnitt hat ferner den Vorteil, dass ein Kunde die fehlende Füllung nicht wahrnimmt, da beim Zubeißen der Grundkörper in das Expansionsvolumen gedrängt wird.

Die Anordnung des Expansionsvolumens am Mantelabschnitt angrenzend stellt ein besseres Erlebnis für den Kunden beim Essen des Schaumkusses bereit, da der Kunde nach dem Öffnen des Mantelabschnitts das wenigstens eine Expansionsvolumen nicht wahrnimmt. Dies ist anders bei der Anordnung des wenigstens einen Expansionsvolumens im Inneren der Schaummasse.

Das Expansionsvolumen ist vorzugsweise mit Luft oder einem anderen verzehrgeeigneten Gas gefüllt.

Die Schaummasse weist vorzugsweise eine Schaumdichte von gleich oder größer als 0,1 g/cm³, insbesondere gleich oder größer als 0,2 g/cm³, und/oder von gleich oder kleiner als 1,0 g/cm³, insbesondere von gleich oder kleiner als 0,5 g/cm³, auf. Das Expansionsvolumen weist vorzugsweise eine Schaumdichte von weniger als 0,1 g/cm³, insbesondere weniger als 0,05 g/cm³, vorzugsweise weniger als 0,01 g/cm³, bevorzugt weniger als 0,001 g/cm³, auf. Vorzugsweise ist das Verhältnis zwischen der Schaumdichte der Schaummasse und der Schaumdichte des Expansionsvolumens größer als 1, insbesondere größer als 2, vorzugsweise größer als 3, bevorzugt größer als 10, weiter bevorzugt größer als 100, ausgebildet.

Die Schaumdichte der Schaummasse und des Expansionsvolumen kann in einem einfachen Messaufbau ermittelt werden. Dazu wird ein Messbecher auf einer Waage positioniert und das Gewicht tariert. Anschließend wird ein Messvolumen von, insbesondere 2 cm³, in den Messbecher gefüllt. Aus dem Verhältnis zwischen dem gemessenen Gewicht des Messvolumens und dem tatsächlich eingefüllten Messvolumen kann die Schaumdichte errechnet werden. Die Messung erfolgt bei einer Umgebungstemperatur von 20°, einem Umgebungsdruck von 1 bar und einer Luftfeuchtigkeit von 40%.

Ein vorteilhafter Aspekt der Erfindung sieht vor, dass das Expansionsvolumen eine senkrecht zur Hochachse zwischen der Schaummasse und dem Mantelabschnitt verlaufende Expansionsbreite aufweist, welche in einem Bereich zwischen 2 mm und 10 mm, insbesondere zwischen 3 mm und 8 mm, vorzugsweise zwischen 4 mm und 6 mm, liegt.

Ein vorteilhafter Aspekt der Erfindung sieht vor, dass das Expansionsvolumen eine senkrecht zur Hochachse innerhalb der Schaummasse verlaufendes Expansionsdurchmesser aufweist, welcher in einem Bereich zwischen 2 mm und 10 mm, insbesondere zwischen 3 mm und 8 mm, vorzugsweise zwischen 4 mm und 6 mm, liegt.

Ein vorteilhafter Aspekt der Erfindung sieht vor, dass die Schaummasse abschnittweise an dem Mantelabschnitt anliegt. Folglich füllt die Schaummasse den Hohlraum, mit Ausnahme des wenigstens einen Expansionsvolumen, aus. Die Schaummasse weist vorzugsweise wenigstens einen Anlageabschnitt auf, wobei der wenigstens eine Anlageabschnitt an dem Mantelabschnitt anliegt. Die Anlageabschnitte unterstützen zusätzlich die Stabilität des Grundkörpers.

Vorzugsweise sind entlang des um die Hochachse verlaufenden Umfangs mehrere, insbesondere zwei, drei, vier, fünf oder sechs, Expansionsvolumina und/oder mehrere, insbesondere zwei, drei, vier, fünf oder sechs, Anlageabschnitte vorgesehen, welche entlang des Umfangs gleichmäßig verteilt sind. Zwischen zwei benachbarten Expansionsvolumina ist vorzugsweise ein Anlageabschnitt vorgesehen. Folglich sind homogen verteilte Expansionsvolumina vorgesehen, sodass bei einer Volumenvergrößerung die Schaummasse sich gleichmäßig innerhalb des in den Expansionsvolumina vorgesehenen Hohlraums ausdehnen kann.

Ein vorteilhafter Aspekt der Erfindung sieht vor, dass parallel zur Hochachse die Schaummasse und der Grundkörper einen unterschiedlichen Querschnitt aufweisen. Demnach kann das wenigstens eine Expansionsvolumen einfach bereitgestellt werden.

Der Grundkörper weist als parallel zur Hochachse verlaufenden Querschnitt, insbesondere an der Öffnung bzw. an einer die Öffnung begrenzenden Grundkörperkante, ein regelmäßiges Polygon, insbesondere mit Kanten, vorzugsweise mit zehn Kanten, auf. Alternativ weist der Grundkörper vorzugsweise einen kreisrunden Querschnitt auf.

Die Schaummasse weist vorzugsweise einen dreieckigen, viereckigen oder sternförmigen parallel zur Hochachse verlaufenden Querschnitt auf. Bei einem sternförmigen Querschnitt können vorzugsweise drei, vier, fünf, sechs oder sieben Spitzen vorgesehen sein. Jede Spitze bildet dabei vorzugsweise einen Anlageabschnitt. Folglich kann die Schaummasse z.B. mit einer Sterntülle in den Grundkörper eingebracht werden. Folglich kann das wenigstens eine Expansionsvolumen in einer besonders einfachen Art bereitgestellt werden.

Ein vorteilhafter Aspekt der Erfindung sieht vor, dass der Boden eine Waffel und/oder eine Feuchtigkeitssperre aufweist. Vorzugsweise ist die Waffel mit einem Schokoladen- und/oder Fettüberzug versehen. Vorzugsweise ist die Feuchtigkeitssperre zum Schutz der Waffel zwischen der Schaummasse und der Waffel angeordnet. Demnach wird verhindert, dass die Waffel durch in Schaummasse vorhandene Feuchtigkeit aufweicht. Es ist vorteilhaft, wenn die Waffel beidseitig, also auf einer der Schaummasse zugewandten und auf einer Schaummasse abgewandten Seite, mit einer Schokolade und/oder einer Fettglasur überzogen ist.

Ein vorteilhafter Aspekt der Erfindung sieht vor, dass der Mantelabschnitt eine Wandstärke in einem Bereich zwischen 0,5 mm und 6 mm, insbesondere zwischen 0,5 mm und 4 mm, vorzugsweise zwischen 0,5 mm und 2 mm, bevorzugt zwischen 1 mm und 2 mm, aufweist. Alternativ kann der Mantelabschnitt eine Wandstärke in einem Bereich zwischen 1 mm und 6 mm, insbesondere zwischen 2 mm und 4 mm, aufweisen. Demnach kann ein besonders stabiler Grundkörper bereitgestellt werden, welcher robuster gegenüber Stößen ausgebildet ist.

Ein vorteilhafter Aspekt der Erfindung sieht vor, dass der Grundkörper, insbesondere der Mantelabschnitt und/oder der Kopfabschnitt, an der Außenseite abschnittsweise plane Flächen aufweist. Der Mantelabschnitt ist vorzugsweise durch mehrere, insbesondere sieben, acht, neun, zehn, elf, zwölf, dreieckige Flächenabschnitte gebildet. Es ist vorteilhaft, wenn zwei benachbarte dreieckige Flächenabschnitte um 180° zueinander gedreht sind, wobei vorzugsweise eine Spitze zur Öffnung zeigt und eine benachbarte Spitze zum Kopfabschnitt zeigt. Der Kopfabschnitt kann ebenfalls durch dreieckige Flächenabschnitte gebildet sein. Es sind selbstverständlich auch andere polygone, insbesondere viereckige, fünfeckige oder sechseckige, Flächenabschnitte und eine Kombination denkbar. Folglich wird ein Schaumkuss mit einem ästhetischen Gesamteindruck bereitgestellt. Ferner ermöglichen die Flächenabschnitte eine einfache Lagerung und Herstellung des Schaumkusses.

Ein vorteilhafter Aspekt der Erfindung sieht vor, dass der Grundkörper sich hin zum Kopfabschnitt verjüngt, und wobei der Mantelabschnitt und die Hochachse einen Winkel zwischen 0,5° und 10°, insbesondere zwischen 1° und 8°, vorzugsweise zwischen 2° und 5°, bevorzugt von 3°, einschließen. Folglich kann eine charakteristische Glockenform mit einem steilen Mantelabschnitt bereitgestellt werden, wobei gleichzeitig der Grundkörper aus einer Negativform zuverlässig lösbar ist.

Ein vorteilhafter Aspekt der Erfindung sieht vor, dass der Mantelabschnitt sich hin zur Öffnung und/oder hin zum Kopfabschnitt verjüngt. Folglich kann weist der Mantelabschnitt eine veränderliche Wandstärke auf. Demnach kann z.B. an der Öffnung eine größere Wandstärke bereitgestellt werden, was einem Kantenabplatzen entgegenwirkt.

Ein vorteilhafter Aspekt der Erfindung sieht vor, dass der Grundkörper aus Schokolade und/oder aus Kakaobutter oder aus Schokolade und/oder aus Fettglasur hergestellt ist und/oder wobei die Schaummasse als Eierschaum, als eierschaumartige Masse und/oder als Eierschaumersatzprodukt ausgebildet ist. Die Schaummasse ist vorzugsweise gesüßt.

Die der Erfindung zugrundeliegende Aufgabe wird ebenfalls gelöst durch ein Verfahren mit den Merkmalen des Anspruchs 10. Die Erfindung ist gerichtet auf ein Verfahren zum Herstellen eines, insbesondere zuvor beschriebenen, Schaumkusses, die Schritte umfassend: Bereitstellen einer Negativform für die Herstellung eines Grundkörpers; Bedecken der Form mit einem Grundkörpermaterial, insbesondere Schokolade und/oder Kakaobutter oder aus Schokolade und/oder aus Fettglasur, zum Herstellen des Grundkörpers, wobei der Grundkörper einen Kopfabschnitt, einen Mantelabschnitt, einen Hohlraum und eine Öffnung aufweist; Dressieren einer Schaummasse in den Hohlraum des Grundkörpers; Anlegen eines Bodens an die Schaummasse; Überziehen des Bodens und des Mantelabschnitts im Bereich der Öffnung zum Verschließen des Hohlraums. Zusätzlich kann auch eine zwischen dem Boden und der Mantelabschnitt vorgesehene Schaummasse vorgesehen werden.

Da die Schaummasse in den Grundkörper dressiert wird, können der Grundkörper und die Schaummasse eine unterschiedliche geometrische Ausgestaltung aufweisen. Demnach kann z.B. der Grundkörper im Querschnitt als regelmäßiges Polygon und die Schaummasse im Querschnitt sternförmig ausgebildet sein.

Im Sinne der Erfindung ist unter einem "Schokokuss" ein Schaumkuss zu verstehen, bei welchem ausschließlich oder im Wesentlichen Schokolade als Grundkörpermaterial und/oder Überzug für die Waffel und/oder Versiegelungsschicht Verwendung findet. Im Sinne der Erfindung ist unter einem "Schaumkuss mit Fettglasur" ein Schaumkuss zu verstehen, bei welchem ausschließlich oder im Wesentlichen eine Fettglasur als Grundkörpermaterial und/oder Überzug für die Waffel und/oder Versiegelungsschicht Verwendung findet.

Die Negativform ist vorzugsweise als Negativ zur Außenseite des Grundkörper ausgebildet. Die Negativform weist vorzugsweise eine Innenkontur und eine Öffnung auf. Die Negativform wird vorzugsweise beim Bereitstellen mit der Öffnung nach oben angeordnet. Im Sinne der Erfindung ist unter dem Begriff "oben" eine Richtungsangabe zu verstehen, welche entgegen dem Vektor der Erdanziehungskraft gerichtet ist.

Zum Bedecken der Negativform wird die Negativform, zumindest im Wesentlichen, mit dem Grundkörpermaterial vorzugsweise gefüllt. Demnach entspricht das Volumen des Grundkörpermaterials dem Volumen des durch die Innenkontur begrenzten Hohlraums der Negativform.

Vorzugsweise wird, insbesondere anschließend, die Negativform gerüttelt, sodass Lufteinschlüsse entweichen bzw. ausgasen können. Demnach ist ein homogenes Grundkörpermaterial und ein vollständiges Benetzen bzw. Bedecken der Innenkontur sichergestellt.

Vorzugsweise wird, insbesondere anschließend, die Negativform invertiert, also um wenigstens 170°, vorzugsweise um 180°, gedreht, sodass die Öffnung der Negativform nach unten gerichtet ist. Im Sinne der Erfindung ist unter dem Begriff "unten" eine Richtungsangabe zu verstehen, welche zum Vektor der Erdanziehungskraft gleichgerichtet ist. Demnach kann das überschüssige Grundkörpermaterial aus der Negativform fließen. Es ist vorteilhaft, wenn beim Herausfließen des Grundkörpermaterials die Negativform gerüttelt wird, sodass die Homogenität der Benetzung der Negativform weiter verbessert wird. Es ist ferner vorteilhaft, wenn die Negativform dabei zunächst gerüttelt wird und anschließend ruht.

Vorzugsweise wird, insbesondere anschließend, die Negativform invertiert, sodass die Öffnung nach oben gerichtet ist. Vorzugsweise wird überschüssiges Grundkörpermaterial im Bereich der Öffnung, insbesondere mit einem Spachtel, gelöst, sodass eine saubere Kante des Grundkörpers bereitgestellt wird.

Vorzugsweise wird, insbesondere anschließend, die Negativform samt dem verbliebenen Grundkörpermaterial gekühlt, sodass das Grundkörpermaterial vollends aushärtet. Dazu kann die Negativform in einen gekühlten Raum, insbesondere Kühlschrank, platziert werden oder die Negativform ist selbst aktiv gekühlt. Vorzugsweise kommt eine Vorrichtung mit mehreren Negativformen zum Einsatz, sodass mehrere Schaumküsse gleichzeitig herstellbar sind.

Zum Dressieren der Schaummasse in den Hohlkörper des Grundkörpers wird die Schaumasse in eine Tülle gefüllt. Die Tülle weist einen Tüllenausgang mit einer spezifischen geometrischen Form auf. Die geometrische Form entspricht vorzugsweise der geometrischen Form des Querschnitts der Schaummasse im Grundkörper. Vorzugsweise kommt eine Sternentülle zum Einsatz. Die Schaummasse wird mittels der Tülle in den sich noch in der Negativform befindlichen Grundkörper eingefüllt bzw. dressiert. Das Dressieren erfolgt vorzugsweise bei einer Umgebungstemperatur, Schaummassentemperatur und/oder Grundkörpertemperatur in einem Bereich zwischen 30°C und 45°C, insbesondere zwischen 35°C und 40°C. Durch Einhalten des Temperaturbereichs ist gewährleistet, dass sich der Grundkörper einfach aus der Negativform lösen lässt. Falls sich der Grundkörper nicht einfach aus der Negativform lösen lässt, muss die Negativform aufwendig gereinigt werden. Ferner stellt der Temperaturbereich sicher, dass die erstarrte Schaummasse standfest bleibt und nicht in sich zusammenfällt. Die Tülle kann manuell bedient werden oder Teil einer automatisierbaren Dressiermaschine sein.

Es wird vorzugsweise derart Schaummasse in den Grundkörper eingefüllt, bis ein Abstand zu der die Öffnung begrenzenden Grundkörperkante vorliegt, welcher in einem Bereich zwischen 2 mm und 15 mm, insbesondere zwischen 5 mm und 10 mm, liegt. Es ist vorteilhaft, wenn zeitlich angrenzend oder anschließend ein Schaummassezipfel ergänzt wird, welcher den Boden, insbesondere die Waffel, trägt. Der Schaummassezipfel kann erzeugt werden, indem Rückzugsgeschwindigkeit angepasst, insbesondere erhöht, und/oder der Ausbringdruck angepasst, insbesondere verringert, wird. Der Schaummassezipfel weist vorzugsweise einen kleineren Querschnitt als die Schaummasse auf. Aufgrund der getrennten Ausbildung der Schaummasse und des Schaummassezipfels ist besonders gut ein nachträgliches Höhennivellieren mittels des Bodens für einen bündigen Abschluss des Grundkörpers möglich. So wird sichergestellt, dass die Schaummasse beim Anbringen des Bodens nicht herausquillt.

Der Boden ist vorzugsweise als feste, knackige Waffel ausgebildet. Der Boden weist vorzugsweise eine niedrige Feuchtigkeit und eine hohe Festigkeit auf. Die Waffel ist vorzugsweise scheibenförmig ausgebildet und weist vorzugsweise einen kreisrunden Querschnitt auf. Der Boden kann alternativ einen polygonen Querschnitt aufweisen. Vorzugsweise weisen der Boden und die Grundkörperkante denselben Querschnitt auf.

Die Waffel wird anschließend vorzugsweise mit einer Feuchtigkeitssperre, insbesondere einem Schokoladen- oder Fettüberzug, versehen. Dabei ist eine oder beide Flächenseiten und/oder der Rand vorzugsweise bedeckt.

Vorzugsweise wird der Boden, insbesondere die Waffel, an der im Hohlraum vorgesehenen Schaummasse, insbesondere den Schaummassezipfel, angeordnet. Anschließend wird der Boden derart entgegen der Schaummasse, insbesondere der Schaummassezipfel, gedrückt, dass der Boden bündig mit dem Grundkörper, insbesondere der Grundkörperkante, abschließt. Wenn der Boden bündig mit dem Grundkörper ausgebildet ist, ist der Boden vorzugsweise beabstandet zur Grundkörperkante ausgebildet. Vorzugsweise ist zwischen dem Boden und der Grundkörperkante senkrecht zur Hochachse keine Schaummasse oder, zumindest abschnittsweise, Schaummasse vorgesehen. Der Schaumkuss wird anschließend, vorzugsweise mit einer Masse, insbesondere Schokolade und/oder Kakaobutter, versiegelt. Dazu wird die Masse, insbesondere mittels eine Spachtels, über die Öffnung, insbesondere den Boden, die Schaummasse und die Grundkörperkante, gezogen. Das Versiegeln schließt den Hohlraum vorzugsweise fluiddicht ab. Der Boden ist vorzugsweise derart ausgebildet und/oder angeordnet, dass die Feuchtigkeitssperre zum Schutz des Bodens zwischen der Schaummasse und dem Boden angeordnet ist.

Nach Versiegeln der Schaumküsse härten diese, insbesondere die Schokolade und/oder die Kakaobutter, aus (Aushärten). Dies kann in gekühlten und/oder getrockneten Räumen erfolgen. Je kühler der Raum ist, desto schneller härten die Schaumküsse aus. Sobald das Grundkörpermaterial und/oder die Masse ausgehärtet und/oder ausgetrocknet ist, wird die Negativform vorzugsweise um 180° gedreht. Dabei lösen sich die Schaumküsse selbstständig und fallen auf eine darunter angeordnete Ablagefläche. Es ist denkbar, dass die Negativform zusätzlich gerüttelt oder angeschlagen werden muss, damit die Schaumküsse sich lösen.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1: eine perspektivische Ansicht eines Schaumkusses;
- Fig. 2: eine Seitenansicht des Schaumkusses nach Fig. 1;
- Fig. 3: eine parallel zu einer Hochachse verlaufende Schnittansicht des Schaumkusses nach Fig. 1; und
- Fig. 4: eine senkrecht zur Hochachse verlaufende Schnittansicht des Schaumkusses nach Fig. 1.

Gemäß 1 bis 4 weist der Schaumkuss 10 einen sich entlang einer Hochachse 12 erstreckenden Grundkörper 14 mit einem Kopfabschnitt 16, mit einem Mantelabschnitt 18 und mit einem vom Kopfabschnitt 16 begrenzten Hohlraum 20 auf. Der Hohlraum 20 ist durch eine Öffnung 22 zugänglich. Die Öffnung 22 ist dem Kopfabschnitt 16 entlang der Hochachse 12 gegenüberliegend angeordnet. Im Hohlraum 20 ist eine Schaummasse 24 angeordnet. Die Öffnung 22 bzw. der Hohlraum 20 ist mittels eines vom Grundkörper 14 separat ausgebildeten Bodens 26 verschlossen.

Der Grundkörper 14 ist aus Schokolade und/oder aus Kakaobutter oder aus Schokolade und/oder aus Fettglasur hergestellt. Die Schaummasse 24 ist aus einem formstabilen Eierschaum, aus einer eierschaumartigen Masse und/oder aus einem Eierschaumersatzprodukt hergestellt. Der Boden 26 ist aus einer kreisrunden, scheibenförmigen Waffel hergestellt.

Der Grundkörper 14 ist im Wesentlichen topfförmig ausgebildet. Der Grundkörper 14 weist zudem an eine die Öffnung begrenzende Grundkörperkante 28 auf. Der Grundkörper 14, insbesondere die Grundkörperkante 28, verlaufen entlang eines Polygons, insbesondere mit sechs, sieben, acht, neun oder zehn Kanten.

Der Grundkörper 14, insbesondere der Mantelabschnitt 18 und/oder der Kopfabschnitt 16, weist an einer dem Hohlraum 20 abgewandten Außenseite 30 abschnittsweise plane Flächen 32 auf. Der Mantelabschnitt 18 ist vorzugsweise durch mehrere, insbesondere sieben, acht, neun, zehn, elf, zwölf, dreieckige Flächenabschnitte 34 gebildet. Zwei benachbarte dreieckige Flächenabschnitte 34 sind um 180° zueinander gedreht, wobei eine Spitze eines Flächenabschnitts 34 zur Öffnung 22 zeigt und eine benachbarte Spitze eine benachbarten Flächenabschnitts 34 zum Kopfabschnitt 16 zeigt. Der Kopfabschnitt 16 kann ebenfalls durch dreieckige Flächenabschnitte 34 gebildet sein. Es sind selbstverständlich auch andere polygone, insbesondere viereckige, fünfeckige oder sechseckige, Flächenabschnitte 34 und eine Kombination denkbar.

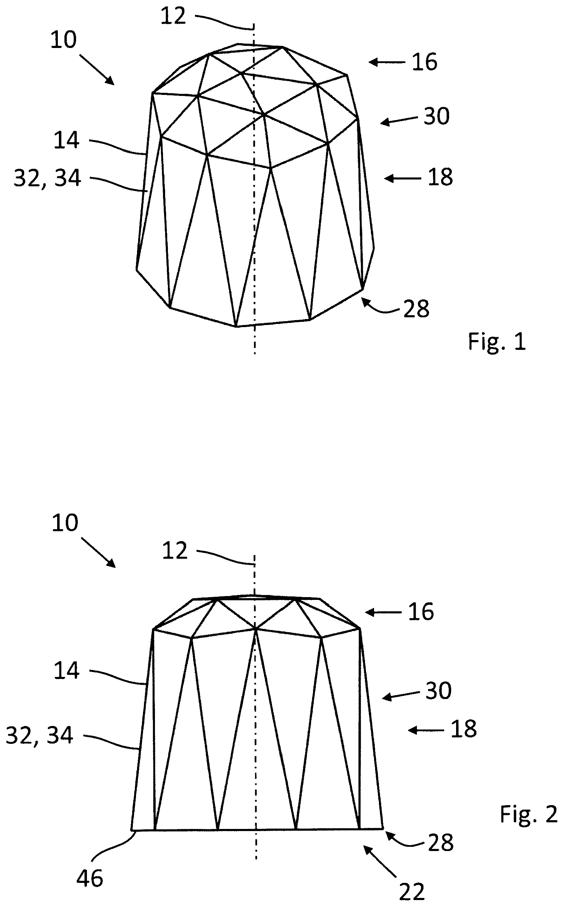

Der Grundkörper 14 verjüngt sich hin zum Kopfabschnitt 16 gemäß Fig. 2, wobei der Mantelabschnitt 18 und die Hochachse 12 einen Winkel zwischen 0,5° und 10°, insbesondere zwischen 1° und 8°, vorzugsweise zwischen 2° und 5°, bevorzugt von 3°, einschließen.

Der Mantelabschnitt 18 verjüngt sich hin zur Öffnung 22 und/oder hin zum Kopfabschnitt 16. Demnach weist der Mantelabschnitt 18 einen Wandstärkengradienten auf.

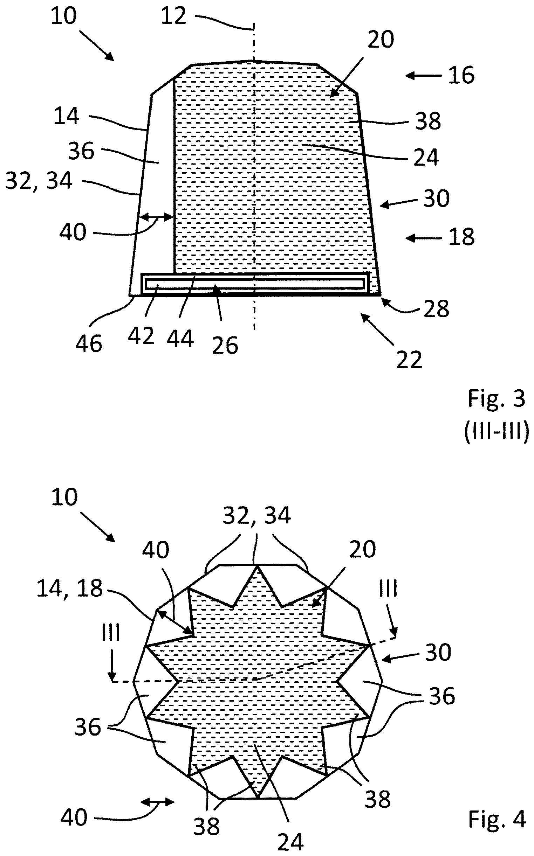

Die Schaummasse 24 ist derart im Grundkörper 14 angeordnet, dass innerhalb der Schaummasse 24 und/oder gemäß Fig. 3 und 4 zumindest abschnittsweise zwischen der Schaummasse 24 und dem Mantelabschnitt 18 wenigstens ein Expansionsvolumen 36 vorgesehen ist. Die Schaummasse 24 ist vorzugsweise gemäß Fig. 4 sternförmig ausgebildet und weist zehn Anlageabschnitte 38 auf, welche unmittelbar an dem Mantelabschnitt 18 anliegen. Zwischen zwei benachbarten Anlageabschnitten 38 ist jeweils ein Expansionsvolumen 36 angeordnet. Demnach weist der Schaumkuss 10 ebenfalls zehn Expansionsvolumina 36 auf. Eine abweichende Anzahl von Anlageabschnitten 38 und Expansionsvolumen 36 ist auch denkbar. Entlang des Umfangs der Schaummasse 24 sind die Anlageabschnitte 38 und/oder die Expansionsvolumina 36 gleichmäßig verteilt angeordnet.

Aufgrund der Expansionsvolumina 36 kann der Schaumkuss 10 stabil unter verschiedenen Umgebungsbedingungen transportiert und/oder gelagert werden. Sollte es z.B. durch eine Temperatursteigerung zu einem Ausdehnen der Schaummasse 24 (Volumenvergrößerung) kommen, kann die Schaummasse 24 in das Expansionsvolumen 36 expandieren. Demnach ist sichergestellt, dass die Schaummasse 24 bei der Volumenvergrößerung nicht den Grundkörper 14 zerstört, aufreißt, durchbricht bzw. aufsprengt. Demnach kann die Ästhetik des Schaumkusses 10 aufrechthalten bleiben. Die Anordnung des Expansionsvolumen 36 zwischen der Schaummasse 24 und dem Mantelabschnitt 18 hat ferner den Vorteil, dass ein Kunde die fehlende Füllung nicht wahrnimmt, da beim Zubeißen der Grundkörper 14 in das Expansionsvolumen 36 gedrängt wird.

Das Expansionsvolumen 36 ist vorzugsweise mit Luft oder einem anderen verzehrgeeigneten Gas gefüllt.

Die Schaummasse 24 weist vorzugsweise eine Schaumdichte von gleich oder größer als 0,1 g/cm3, insbesondere gleich oder größer als 0,2 g/cm3, und/oder von gleich oder kleiner als 1,0 g/cm3, insbesondere von gleich oder kleiner als 0,5 g/cm3, auf. Das Expansionsvolumen 36 weist vorzugsweise eine Schaumdichte von weniger als 0,1 g/cm3, insbesondere weniger als 0,05 g/cm3, vorzugsweise weniger als 0,01 g/cm3, bevorzugt weniger als 0,001 g/cm3, auf. Vorzugsweise ist das Verhältnis zwischen der Schaumdichte der Schaummasse 24 und der Schaumdichte des Expansionsvolumens 36 größer als 1, insbesondere größer als 2, vorzugsweise größer als 3, bevorzugt größer als 10, weiter bevorzugt größer als 100, ausgebildet.

Gemäß Fig. 3 und 4 weisen die Expansionsvolumina 36 jeweils eine senkrecht zur Hochachse 12 zwischen der Schaummasse 24 und dem Mantelabschnitt 18 verlaufende Expansionsbreite 40 auf, welche in einem Bereich zwischen 2 mm und 10 mm, insbesondere zwischen 3 mm und 8 mm, vorzugsweise zwischen 4 mm und 6 mm, liegt. Aufgrund der verjüngenden Ausbildung des Grundkörpers 14 kann auch die Expansionsbreite 40 hin zum Kopfabschnitt 16 kleiner werden. Es ist alternativ denkbar, dass die Schaummasse 24 entsprechend der Verjüngung des Grundkörpers 14 ausgebildet ist, sodass die Expansionsbreite 40 entlang der Hochachse 12 im Wesentlichen konstant ist.

Gemäß Fig. 3 weist der Boden 26 eine Waffel 42 und eine Feuchtigkeitssperre 44 auf, welche zum Schutz der Waffel 42 zwischen der Schaummasse 24 und der Waffel 42 angeordnet ist. Demnach wird verhindert, dass die Waffel 42 durch in der Schaummasse 24 vorhandene Feuchtigkeit aufweicht. Die Waffel 42 ist der Einfachheit halber beidseitig beschichtet, also auf einer der Schaummasse 24 zugewandten und auf einer der Schaummasse 24 abgewandten Seite, mit einer Schokolade und/oder einer Fettglasur überzogen ist.

Der Boden 26 ist derart ausgebildet und an der Schaummasse 24 angeordnet, dass der Boden 26 umlaufend beabstandet zum Grundkörper 14, insbesondere zur Grundkörperkante 28 angeordnet ist. An der Grundkörperkante 28 ist zwischen dem Boden 26 und dem Grundkörper 14 Schaummasse 24 vorgesehen. Vorzugsweise sind der Boden 26 und die Grundkörperkante 28, vorzugsweise zusätzlich auch die Schaummasse 24, bündig ausgebildet. Zum fluiddichten Verschließen des Schaumkusses 10 weist der Schaumkuss 10 eine Versiegelungsschicht 46 auf, welche die Öffnung 22 verschließt, insbesondere den Boden 26, die Schaummasse 24 und die Grundkörperkante 28 versiegelt. Die Versiegelungsschichte 46 ist vorzugsweise separat zur Beschichtung des Bodens 26 ausgebildet.

Zum Herstellen eines Schaumkusses 10, insbesondere eines Schokokusses, wird zunächst eine Negativform mit einer oder mehreren Herstellungsplätzen bereitgestellt. Die Negativform wird zum Herstellen des Grundkörpers 14 mit Schokolade bedeckt. Dazu wird die Negativform, insbesondere die Herstellungsplätze, mit Schokolade vollständig gefüllt. Nach einer Wartezeit wird die Negativform um 180° gedreht, sodass die Schokolade bis auf die Wandstärke des Grundkörpers 14 aus der Negativform herausfließt. Dabei ist der Kopfabschnitt 16 des Grundkörpers 14 nach oben gerichtet. Anschließend wird die Negativform wieder um 180° gedreht, sodass der Kopfabschnitt 16 nach unten gerichtet ist. Die Negativform kann mit den Grundkörpern 14 gekühlt werden, sodass die Schokolade trocknet. Zum Ausbilden einer sauberen Grundkörperkante 28 kann überschüssige Schokolade entfernt werden. In dem Zustand wird in den sich ergebenden Hohlraum 20 des Grundkörpers 14 durch die Öffnung 22 die Schaummasse 24 mittels einer Sterntülle dressiert.

Da die Schaummasse 24 in den Grundkörper 14 dressiert wird, können der Grundkörper 14 und die Schaummasse 24 eine unterschiedliche geometrische Ausgestaltung bzw. Form aufweisen. Demnach kann z.B. gemäß Fig. 4 der Grundkörper 14 im Querschnitt als regelmäßiges Polygon und die Schaummasse 24 im Querschnitt sternförmig ausgebildet sein. Folglich bilden sich am Mantelabschnitt 18 Anlageabschnitte 38 und Expansionsvolumina 36 aus, welche sich vorteilhaft auf die Herstellung, Lagerung und den Transport der Schaumküsse 10 auswirkt. In Fig. 4 sind die Anlageabschnitte 38 und die Expansionsvolumina 36 ideal als Spitzen eines Sterns und Ausnehmung zwischen zwei Spitzen des Sterns dargestellt. Es ist auch denkbar, dass die Spitzen abgeflacht sind, sodass die Anlageabschnitte 38 nicht punktförmig oder linienförmig, sondern flächig an dem Mantelabschnitt 18 anliegen. Auch die Expansionsvolumina 36 können entsprechend von der Form der Ausnehmung zwischen zwei Spitzen des Sterns leicht abweichen. Ebenfalls können die Fußbereiche der Sterne schmaler oder breiter ausgestaltet sein, sodass entsprechend die Expansionsvolumina 36 kleiner oder größer ausgebildet sein. In Fig. 4 sind beispielhaft zehn Anlageabschnitte 38 und zehn Expansionsvolumina 36 vorgesehen.

Die Schaummasse 24 wird derart in den Grundkörper 14 eingefüllt, dass ein Abstand zu der die Öffnung 22 begrenzenden Grundkörperkante 28 vorliegt, welcher in einem Bereich zwischen 2 mm und 15 mm, insbesondere zwischen 5 mm und 10 mm, liegt. Anschließend wird ein Schaummassezipfel ergänzt, welcher den Boden 26 trägt.

Dem Boden 26 wird eine Feuchtigkeitssperre 44, insbesondere ein Schokoladenüberzug, hinzugefügt. Dazu wird die Waffel 42 vollständig mit dem Schokoüberzug bedeckt bzw. beschichtet. Anschließend wird der Boden 26 an die Schaummasse 24, insbesondere den Schaummassezipfel, angelegt. Der Boden 26 wird derart an die Schaummasse 24 gedrückt, dass der Boden 26 bündig mit dem Grundkörper 14, insbesondere der Grundkörperkante 28, ausgebildet ist. Der Boden 26 ist senkrecht zur Hochachse 12 bestandet zum Grundkörper 14 angeordnet. Senkrecht zur Hochachse 12 ist zwischen dem Boden 26 und dem Grundkörper 14 Schaumasse 24 vorgesehen.

Der Schaumkuss 10 wird anschließend mit Schokolade, welche eine Versiegelungsschicht 46 bildet, versiegelt. Dazu wird die Schokolade mittels eine Spachtels über den Boden 26, die Schaummasse 24 und die Grundkörperkante 28 gezogen. Die Versiegelungsschicht 46 schließt den Hohlraum 20 fluiddicht ab. Die Schokolade ist dabei derart temperiert, dass keine Beeinträchtigung der Schaummasse 24 erfolgt und eine gute Anbindung an den Boden 26, die Schaummasse 24 und den Grundkörper 14 sichergestellt ist. Der Boden 26 ist derart ausgebildet und/oder angeordnet, dass die Feuchtigkeitssperre 44 zum Schutz des Bodens 26 zwischen der Schaummasse 24 und dem Boden 26 angeordnet ist.

Nach Versiegeln der Schaumküsse 10 härten diese, insbesondere die Schokolade, aus. Dies erfolgt in einem gekühlten Raum. Sobald die Schokolade ausgehärtet ist, wird die Negativform, insbesondere um 180°, gedreht. Dabei lösen sich die Schaumküsse 10 selbstständig und fallen auf eine darunter angeordnete Ablagefläche. Falls Schaumküsse 10 sich nicht durch ihr Eigengewicht lösen, wird die Negativform zusätzlich gerüttelt oder angeschlagen.

### Bezugszeichenliste

- 10: Schaumkuss
- 12: Hochachse
- 14: Grundkörper
- 16: Kopfabschnitt
- 18: Mantelabschnitt
- 20: Hohlraum
- 22: Öffnung
- 24: Schaummasse
- 26: Boden
- 28: Grundkörperkante
- 30: Außenseite
- 32: plane Fläche
- 34: Flächenabschnitt
- 36: Expansionsvolumen
- 38: Anlageabschnitt
- 40: Expansionsbreit
- 42: Waffel
- 44: Feuchtigkeitssperre
- 46: Versiegelungsschicht

## Patentansprüche

1. Schaumkuss (10) umfassend:
- einen sich entlang einer Hochachse (12) erstreckenden Grundkörper (14) mit einem Kopfabschnitt (16), mit einem Mantelabschnitt (18) und mit einem vom Kopfabschnitt (16) und vom Mantelabschnitt (18) begrenzten Hohlraum (20), wobei der Hohlraum (20) durch eine Öffnung (22) zugänglich ist,
- eine im Hohlraum (20) angeordnete Schaummasse (24),
- einen vom Grundkörper (14) separat ausgebildeten Boden (26) zum Verschließen der Öffnung (22),
wobei die Schaummasse (24) derart im Grundkörper (14) angeordnet ist, dass innerhalb der Schaummasse (24) und/oder zumindest abschnittsweise zwischen der Schaummasse (24) und dem Mantelabschnitt (18) wenigstens ein Expansionsvolumen (36) vorgesehen ist,
wobei das Expansionsvolumen (36) mit Luft oder einem anderen verzehrgeeigneten Gas oder einer Schaummasse (24) mit einer Schaumdichte von weniger als 0,1 g/cm³ gefüllt ist.

2. Schaumkuss (10) nach Anspruch 1, wobei das wenigstens eine Expansionsvolumen (36) eine senkrecht zur Hochachse (12) zwischen der Schaummasse (24) und dem Mantelabschnitt (18) verlaufende Expansionsbreite (40) aufweist, welche in einem Bereich zwischen 2 mm und 10 mm, insbesondere zwischen 3 mm und 8 mm, vorzugsweise zwischen 4 mm und 6 mm, liegt.

3. Schaumkuss (10) nach einem der Ansprüche 1 oder 2, wobei die Schaummasse (24) abschnittweise an dem Mantelabschnitt (18) anliegt.

4. Schaumkuss (10) nach einem der Ansprüche 1 bis 3, wobei die Schaummasse (24) und der Grundkörper (14) einen parallel zur Hochachse (12) verlaufenden unterschiedlichen Querschnitt aufweisen, und/oder wobei die Schaummasse (24) einen parallel zur Hochachse (12) verlaufenden sternförmigen Querschnitt aufweist, und/oder wobei der Grundkörper (14) einen parallel zur Hochachse (12) verlaufenden Querschnitt nach einem regelmäßigen Polygon aufweist.

5. Schaumkuss (10) nach einem der vorherigen Ansprüche, wobei der Boden (26) eine Waffel (42) und/oder eine Feuchtigkeitssperre (44), insbesondere einen Schokoladen- oder Fettüberzug, aufweist, und insbesondere wobei die Feuchtigkeitssperre (44) zum Schutz der Waffel (42) zwischen der Schaummasse (24) und der Waffel (42) angeordnet ist.

6. Schaumkuss (10) nach einem der vorherigen Ansprüche, wobei der Grundkörper (14), insbesondere der Mantelabschnitt (18) und/oder der Kopfabschnitt (16), an der Außenseite (30) abschnittsweise plane Flächen (32) aufweist.

7. Schaumkuss (10) nach einem der vorherigen Ansprüche, wobei der Grundkörper (14) sich hin zum oder weg vom Kopfabschnitt (16) verjüngt, und wobei der Mantelabschnitt (18) und die Hochachse (12) einen Winkel zwischen 0,5° und 10°, insbesondere zwischen 1° und 8°, vorzugsweise zwischen 2° und 5°, bevorzugt von 3°, einschließen.

8. Schaumkuss (10) nach einem der vorherigen Ansprüche, wobei der Mantelabschnitt (18) sich hin zur Öffnung (22) und/oder hin zum Kopfabschnitt (16) verjüngt.

9. Schaumkuss (10) nach einem der vorherigen Ansprüche, wobei der Grundkörper (14) aus Schokolade und/oder aus Kakaobutter oder aus Schokolade und/oder aus Fettglasur hergestellt ist, und/oder wobei die Schaummasse (24) als Eierschaum, als eierschaumartige Masse oder als Eierschaumersatzprodukt ausgebildet ist.

10. Verfahren zum Herstellen eines Schaumkusses (10), insbesondere nach einem der vorherigen Ansprüche, die Schritte umfassend:
a) Bereitstellen einer Negativform für die Herstellung eines Grundkörpers (14);
b) Bedecken der Negativform mit einem Grundkörpermaterial, insbesondere Schokolade und/oder Fettglasur, zum Herstellen des Grundkörpers (14), wobei der Grundkörper (14) einen Kopfabschnitt (16), einen Mantelabschnitt (18), einen Hohlraum (20) und eine Öffnung (22) aufweist;
c) Dressieren einer Schaummasse (24) in den Hohlraum (20) des Grundkörpers (14);
d) Anlegen einer Waffel (26) an die Schaummasse (24), wobei die Waffel (26) an beiden Flächenseiten mit einem Schokoladen- oder Fettüberzug bedeckt ist;
e) Überziehen der Waffel (26), der Schaummasse (24) und des Mantelabschnitts (18) im Bereich der Öffnung (22) mit einer Masse, insbesondere Schokolade und/oder Kakaobutter, zum Verschließen des Hohlraums (20).
